# EUROPEAN PATENT SPECIFICATION

(11) **EP 3 536 498 B1**
(45) Date of publication and mention of the grant of the patent: **22.09.2021**
(21) Application number: 18803519.0
(22) Date of filing: 12.03.2018
(51) Int. Cl.: B32B 37/10, B32B 41/00, B32B 37/20

(54) **MULTIFUNCTIONAL LAMINATING MACHINE AND LAMINATING METHOD**
MULTIFUNKTIONELLE LAMINIERMASCHINE UND LAMINIERVERFAHREN
MACHINE À LAMINER MULTIFONCTION ET PROCÉDÉ DE LAMINAGE

(30) Priority: 19.01.2018 CN 201810053573
(43) Date of publication of application: 11.09.2019
(73) Proprietor: Sinomech Corporation, Guangzhou, Guangdong 510800 (CN)
(72) Inventor: LI, Junhong, Guangzhou, Guangdong 510800 (CN)
(74) Representative: Haseltine Lake Kempner LLP
(86) International application number: PCT/CN2018/078694
(87) International publication number: WO 2019/140766

(56) References cited:
- CN-A- 106 183 349
- CN-A- 107 283 997
- CN-A- 107 498 980
- CN-U- 205 522 870
- US-A1- 2004 218 156
- Anonymous: "Composite | Definition of Composite by Merriam-Webster", , 8 December 2017 (2017-12-08), XP055658972, Retrieved from the Internet: URL:https://web.archive.org/web/2017120805 0732/https://www.merriam-webster.com/dicti onary/composite [retrieved on 2020-01-17]

## Description

### Field of the Invention

The present invention relates to a multifunctional laminating machine and laminating method thereof.

### Background of the Invention

At present when base material is laminated via a laminating machine, there may be an uneven glue layer if much roughness exists on the base material. If the glue couldn't be leveled sufficiently, or some defects exist on the laminating rubber roller, the non-uniform glue layer occurs as well. A laminating machine and a method according to the background art are disclosed in CN 107 283 997 A.

### Summary of the Invention

The technical problem to be solved by the present invention is to provide a multifunctional laminating machine with a reasonable structural design, which could fulfill various compounding requirements.

To solve the above mentioned technical problems, the present invention comprises a frame, the frame comprising a first frame side, a second frame side and a frame top arranged on the top of the first frame side and the second frame side;
a first unwinding mechanism, a first unwinding tension device, a first coating channel tension-control pendulum roller device and a coating mechanism being arranged on the first frame side;
a second unwinding mechanism, a rewinding mechanism, a material-pressing device, a second unwinding tension device and a laminating device being arranged on the second frame side;
the laminating device comprising a laminating cylinder, a first pressing rubber roller, a rubber roller bracer, a first rubber roller swing arm, a fixing fulcrum shaft, a first back-up steel roller, a second pressing rubber roller, a back-up steel roller bracer, a first back-up steel roller swing arm, a second rubber roller swing arm, a return tension spring, a first cylinder and a second cylinder,
the laminating cylinder being connected with the second frame side, the first rubber roller swing arm being fixed on both ends of the rubber roller bracer, the first pressing rubber roller being mounted on the first rubber roller swing arm, the first back-up steel roller swing arm being fixed on both ends of the back-up steel roller bracer, the first back-up steel roller being mounted on the first back-up steel roller swing arm, the fixing fulcrum shaft being connected with the first back-up steel roller swing arm through the first rubber roller swing arm, the ends of the first fixing fulcrum shaft being fixed on the second frame side, the first rubber roller swing arm and the first back-up steel roller swing arm being rotatable on the fixing fulcrum shaft, the first rubber roller swing arm being connected with the first back steel roller swing arm by the return tension spring, one end of the first cylinder being fixed on the second frame side, the other end of the first cylinder being connected with the first back-up steel roller swing arm, one end of the second cylinder being fixed on the second frame side, the other end of the second cylinder being connected with the second rubber roller swing arm, the second pressing rubber roller being mounted on the second rubber roller swing arm, the second pressing rubber roller being at the left end of the laminating cylinder, the first back-up steel roller and the first pressing rubber roller being at the right end of the laminating cylinder;
a first guide roller, a second guide roller and a third guide roller being arranged above the first back-up steel roller, the laminating cylinder, the first pressing rubber roller and the second pressing rubber roller in order from left to right, a fourth guide roller being arranged below the laminating cylinder.

As a further improvement of the present invention, the laminating device further comprises a positioning flat pin, a rotary sleeve and a positioning screw,
the rotary sleeve being mounted on the first rubber roller swing arm, the positioning flat pin being mounted within the rotary sleeve, more than two positioning grooves being arranged on the rotary sleeve, the positioning crew being arranged on the first rubber roller swing arm and engaged with the positioning grooves.

As a further improvement of the present invention, the material-pressing device comprises a material-pressing holder and a material-pressing rod,
a material-pressing roller being arranged on one end of the material-pressing rod, the other end of the material-pressing rod being hinged with the second frame side, the material-pressing holder being connected with the second frame side, a material-pressing cylinder being hinged on the material-pressing holder, a number of positioning holes being arranged on the material-pressing rod, the driving end of the material-pressing cylinder being connected with one of the positioning hole.

As a further improvement of the present invention, a number of wide slot two-way partial guide roller are arranged on the first frame side, the second frame side and the frame top.

The advantageous effects of the present invention lie in that a forward single laminating process, a forward double laminating process and an inverse single laminating process could be realized with the multifunctional laminating machine, thereby meeting different demands in use.

The present invention further comprises a laminating method of the multifunctional laminating machine, comprising a forward single laminating process, a forward double laminating process and an inverse single laminating process;
the forward single laminating process comprising the following steps:
   A1. making a first substrate material on a first unwinding device pass through a first pendulum roller device, a first unwinding tension device, a coating mechanism, a first coating channel tension-control pendulum roller device and a second guide roller in turn, and then making it enter the right side of a laminating cylinder of a laminating device;
   B1. making a second substrate material on a second unwinding device pass through a second unwinding tension device and a third guide roller in turn, and then making it enter the right side of the laminating cylinder of the laminating device;
   C1. accomplishing a rewinding at a rewinding device after the first substrate material and the second substrate material are laminated at the laminating device;
the forward double laminating process comprising the following steps:
   A2. making a first substrate material on a first unwinding device pass through a first pendulum roller device, a first unwinding tension device, a coating mechanism, a first coating channel tension-control pendulum roller device, and a second guide roller in turn, and then making it enter the right side of a laminating cylinder of a laminating device;
   B2. making a second substrate material on a second unwinding device pass through a second unwinding tension device and a third guide roller in turn, and then making it enter the right side of the laminating cylinder of the laminating device;
   C2. laminating the first substrate material and the second substrate material for the first time at the left side of the laminating device and laminating them for the second time at the right side of the laminating device, and then accomplishing a rewinding at a rewinding device after they pass through a first guide roller;
the inverse single laminating process comprising the following steps:
   A3. making a first substrate material on a first unwinding device pass through a first pendulum roller device, a first unwinding tension device, a coating mechanism, a first coating channel tension-control pendulum roller device, and a second guide roller in turn, and then making it enter the left side of a laminating cylinder of a laminating device;
   B3. making a second substrate material on a second unwinding device pass through a second unwinding tension device and a third guide roller in turn, and then making it enter the left side of the laminating cylinder of the laminating device;
   C3. making the laminating cylinder and the second pressing rubber roller to rotate in opposite direction, laminating the first substrate material and the second substrate material at the left side of the laminating device, and then accomplishing a rewinding at a rewinding device after they pass through a fourth guide roller.

### Brief Description of Drawings

Fig.1 is a schematic diagram of the present invention.
Fig.2 is a layout of a first substrate material and a second substrate material on a second frame side if performing a forward single laminating process in the present invention.
Fig.3 is a layout of a first substrate material and a second substrate material on a second frame side if performing a forward double laminating process in the present invention.
Fig. 4 is a layout of a first substrate material and a second substrate material on a second frame side if performing an inverse single laminating process in the present invention.

### Preferred Embodiments of the Present Invention

Further illustration on the present invention will be given in the following in conjunction with drawings

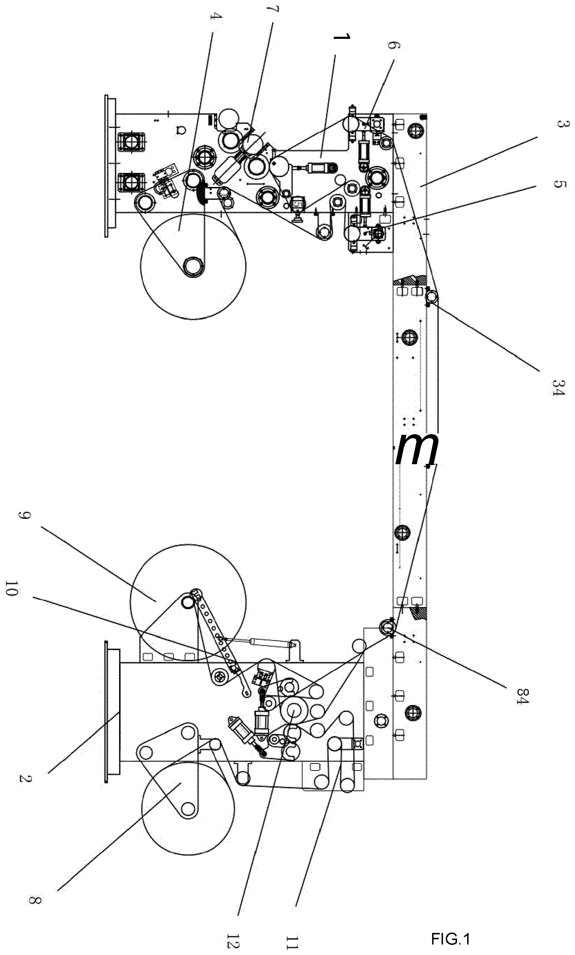

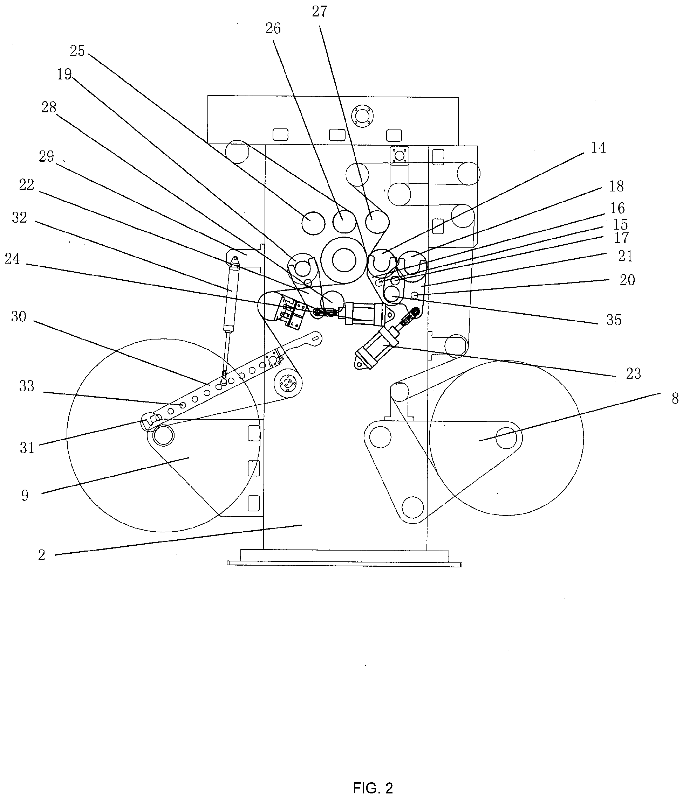

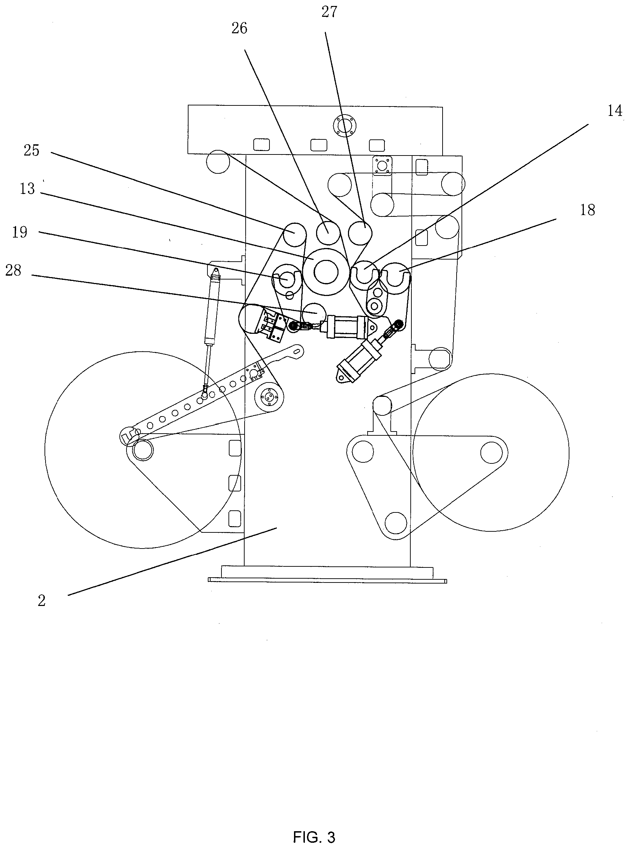

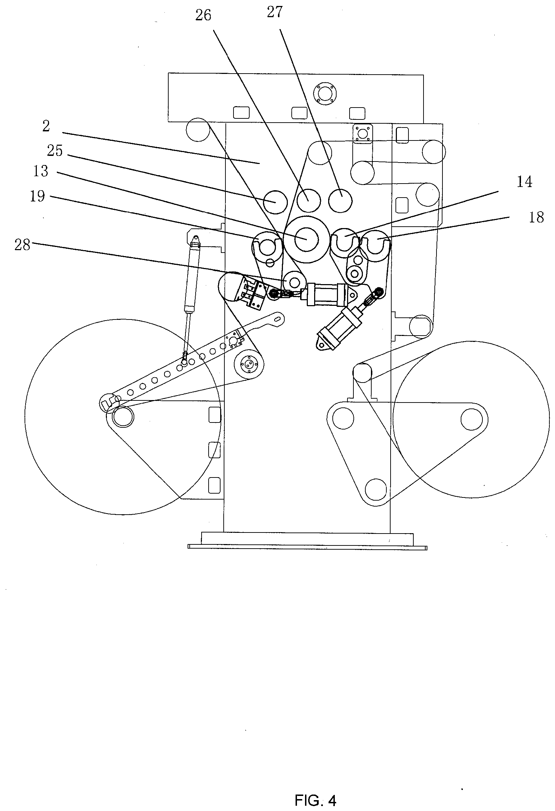

As shown in Fig. 1 to Fig. 4, the present invention includes a frame. The frame includes a first frame side 1, a second frame side 2 and a frame top 3 arranged on the top of the first frame side 1 and the second frame side 2. A first unwinding mechanism 4, a first unwinding tension device 5, a first coating channel tension-control pendulum roller device 6 and a coating mechanism 7 are arranged on the first frame side 1. A second unwinding mechanism 8, a rewinding mechanism 9, a material-pressing device 10, a second unwinding tension device 11 and a laminating device 12 are arranged on the second frame side 2. The laminating device 12 includes a laminating cylinder 13, a first pressing rubber roller 14, a rubber roller bracer 15, a first rubber roller swing arm 16, a fixing fulcrum shaft 17, a back-up steel roller 18, a second pressing rubber roller 19, a back-up steel roller bracer 20, a first back-up steel roller swing arm 21, a second rubber roller swing arm 22, a return tension spring, a first cylinder 23, a second cylinder 24, a positioning flat pin, a rotary sleeve 35 and a positioning screw. The laminating cylinder 13 is connected with the second frame side 2. The first rubber roller swing arm 16 is fixed on both ends of the rubber roller bracer 15. The first pressing rubber roller 14 is mounted on the first rubber roller swing arm 16. The first back-up steel roller swing arm 21 is fixed on both ends of the back-up steel roller bracer 20. The first back-up steel roller 18 is mounted on the first back-up steel roller swing arm 21. The fixing fulcrum shaft 17 is connected with the first back-up steel roller swing arm 21 through the first rubber roller swing arm 16. The ends of the first fixing fulcrum shaft 17 are fixed on the second frame side 2. The first rubber roller swing arm 16 and the first back-up steel roller swing arm 21 are rotatable on the fixing fulcrum shaft 17. The first rubber roller swing arm 16 is connected with the first back-up steel roller swing arm 21 by the return tension spring. One end of the first cylinder 23 is fixed on the second frame side 2. The other end of the first cylinder 23 is connected with the first back-up steel roller swing arm 21. One end of the second cylinder 24 is fixed on the second frame side 2. The other end of the second cylinder 24 is connected with the second rubber roller swing arm 22. The second pressing rubber roller 19 is mounted on the second rubber roller swing arm 22. The said second pressing rubber roller 19 is at the left end of the laminating cylinder 13. The said first back-up steel roller 18 and the first pressing rubber roller 14 are at the right end of the laminating cylinder 13. The rotary sleeve 35 is mounted on the first rubber roller swing arm 16. The positioning flat pin is mounted within the rotary sleeve 35. There are more than two positioning grooves arranged on the rotary sleeve 35. The positioning screw is arranged on the first rubber roller swing arm 16 and engaged with the positioning grooves. A first guide roller 25, a second guide roller 26 and a third guide roller 27 are arranged above the first back-up steel roller 18, the laminating cylinder 13, the first pressing rubber roller 14 and the second pressing rubber roller 19 in order from left to right. A fourth guide roller 28 is arranged below the laminating cylinder 13. The said material-pressing device 10 includes a material-pressing holder 29 and a material-pressing rod 30. A material-pressing roller 31 is arranged on one end of the material-pressing rod 30. The other end of the material-pressing rod 30 is hinged with the second frame side 2. The material-pressing holder 29 is connected with the second frame side 2. A material-pressing cylinder 32 is hinged on the material-pressing holder 29. There are a number of positioning holes 33 arranged on the material-pressing rod 30. The driving end of the material-pressing cylinder 32 is connected with one of the positioning holes 33. There are a number of wide slot two-way partial guide roller 34 arranged on the first frame side 1, the second frame side 2 and the frame top 3.

A forward single laminating process, a forward double laminating process and an inverse single laminating process could be realized with the multifunctional laminating machine, thereby meeting different demands in use. In the forward single laminating process, a first substrate material on a first unwinding device passes through a first pendulum roller device, the first unwinding tension device 5, the coating mechanism 7, the first coating channel tension-control pendulum roller device 6 and the second guide roller 26 in turn, and then it enters the right side of the steal roller 13 of the laminating device 12; a second substrate material on a second unwinding device passes through the second unwinding tension device 11 and the third guide roller 27 in turn, and then it enters the right side of the laminating cylinder 13 of the laminating device 12. The first substrate material and the second substrate material are laminated at the laminating device 12, and then a rewinding is accomplished at a rewinding device. In a forward double laminating process, a first substrate material on a first unwinding device passes through a first pendulum roller device, the first unwinding tension device 5, the coating mechanism 7, the first coating channel tension-control pendulum roller device 6 and the second guide roller 26 in turn, and then it enters the right side of the laminating cylinder 13 of the laminating device 12. A second substrate material on a second unwinding device passes through the second unwinding tension device 11 and the third guide roller 27 in turn, and then it enters the right side of the laminating cylinder 13 of the laminating device 12. The first substrate material and the second substrate material are laminated at the right side of the laminating device 12 for the first time, and they are laminated at the left side of the laminating device 12 for the second time. Then a rewinding is accomplished at a rewinding device after they pass through the first guide roller 25. In the forward double laminating process, the problem of a non-uniform glue layer caused by a non-uniform printing film, by an insufficient leveling of the glue or by some defects existing on the first pressing rubber roller 14 could be solved through two laminating processes with the first pressing rubber roller 14 and the second pressing rubber roller 19. As a result, a double insurance effect could be realized. In an inverse single laminating process, a first substrate material on a first unwinding device passes through a first pendulum roller device, the first unwinding tension device 5, the coating mechanism 7, the first coating channel tension-control pendulum roller device 6 and the second guide roller 26 in turn, and then it enters the left side of the laminating cylinder 13 of the laminating device 12. A second substrate material on a second unwinding device passes through the second unwinding tension device 11 and the third guide roller 27 in turn, and then it enters the left side of the laminating cylinder 13 of the laminating device 12. Make the laminating cylinder 13 and the second pressing rubber roller 19 rotate in opposite direction. The first substrate material and the second substrate material are laminated at the left side of the laminating device 12 and pass through the fourth guide roller 28, and then a rewinding is accomplished at a rewinding device. If the base material on the second unwinding mechanism 8 is aluminum foil, the unevenness existing on the film of the first unwinding mechanism 4 can be passed to the aluminum foil by contacting with the laminating cylinder 13. However this unevenness on the aluminum foil could be solved by the inverse single laminating process.

The present invention further comprises a laminating method of the multifunctional laminating machine comprising: a forward single laminating process, a forward double laminating process and an inverse single laminating process.

The forward single laminating process comprising the following steps:
A1. making a first substrate material on a first unwinding device pass through a first pendulum roller device, a first unwinding tension device, a coating mechanism, a first coating channel tension-control pendulum roller device and a second guide roller in turn, and then making it enter the right side of a laminating cylinder of a laminating device;
B1. making a second substrate material on a second unwinding device pass through a second unwinding tension device and a third guide roller in turn, and then making it enter the right side of the laminating cylinder of the laminating device;
C1. accomplishing a rewinding at a rewinding device after the first substrate material and the second substrate material are laminated at the laminating device.

The forward double laminating process comprising the following steps:
A2. making a first substrate material on a first unwinding device pass through a first pendulum roller device, a first unwinding tension device, a coating mechanism, a first coating channel tension-control pendulum roller device, and a second guide roller in turn, and then making it enter the right side of a laminating cylinder of a laminating device;
B2. making a second substrate material on a second unwinding device pass through a second unwinding tension device and a third guide roller in turn, and then making it enter the right side of the laminating cylinder of the laminating device;
C2. laminating the first substrate material and the second substrate material for the first time at the left side of the laminating device and laminating them for the second time at the right side of the laminating device, and then accomplishing a rewinding at a rewinding device after they pass through a first guide roller.

The inverse single laminating process comprising the following steps:
A3. making a first substrate material on a first unwinding device pass through a first pendulum roller device, a first unwinding tension device, a coating mechanism, a first coating channel tension-control pendulum roller device, and a second guide roller in turn, and then making it enter the left side of a laminating cylinder of a laminating device;
B3. making a second substrate material on a second unwinding device pass through a second unwinding tension device and a third guide roller in turn, and then making it enter the left side of the laminating cylinder of the laminating device;
C3. making the laminating cylinder and the second pressing rubber roller to rotate in opposite direction, laminating the first substrate material and the second substrate material at the left side of the laminating device, and then accomplishing a rewinding at a rewinding device after they pass through a fourth guide roller.

## Claims

1. A multifunctional laminating machine, **characterized by** comprising a frame, the frame comprising a first frame side (1), a second frame side (2), and a frame top (3) arranged on the top of the first frame side (1) and the second frame side (2); a first unwinding mechanism (4), a first unwinding tension device (5), a first coating channel tension-control pendulum roller device (6) and a coating mechanism (7) being arranged on the first frame side (1);
a second unwinding mechanism (8), a rewinding mechanism (9), a material-pressing device (10), a second unwinding tension device (11), and a laminating device (12) being arranged on the second frame side;
the laminating device (12) comprising a laminating cylinder (13), a first pressing rubber roller (14), a rubber roller bracer (15), a first rubber roller swing arm (16), a fixing fulcrum shaft (17), a first back-up steel roller (18), a second pressing rubber roller (19), a back-up steel roller bracer (20), a first back-up steel roller swing arm (21), a second rubber roller swing arm (22), a return tension spring, a first cylinder (23), and a second cylinder (24),
the laminating cylinder (13) being connected with the second frame side (2), the first rubber roller swing arm (16) being fixed on both ends of the rubber roller bracer (15), the first pressing rubber roller (14) being mounted on the first rubber roller swing arm (16), the first back-up steel roller swing arm (21) being fixed on both ends of the back-up steel roller bracer (20), the first back-up steel roller (18) being mounted on the first back-up steel roller swing arm (21), the fixing fulcrum shaft (17) being connected with the first back-up steel roller swing arm (21) through the first rubber roller swing arm (16), the ends of the first fixing fulcrum shaft (17) being fixed on the second frame side (2), the first rubber roller swing arm (16) and the first back-up steel roller swing arm (21) being rotatable on the fixing fulcrum shaft (17), the first rubber roller swing arm (16) being connected with the first back steel roller swing arm (21) by the return tension spring, one end of the first cylinder (23) being fixed on the second frame side (2), the other end of the first cylinder (23) being connected with the first back-up steel roller swing arm (21), one end of the second cylinder (24) being fixed on the second frame side (2), the other end of the second cylinder (24) being connected with the second rubber roller swing arm (22), the second pressing rubber roller (19) being mounted on the second rubber roller swing arm (22), the second pressing rubber roller (19) being at the left end of the laminating cylinder (13), the first back-up steel roller (18) and the first pressing rubber roller (14) being at the right end of the laminating cylinder (13);
a first guide roller (25), a second guide roller (26), and a third guide roller (27) being arranged above the first back-up steel roller (18), the laminating cylinder (13), the first pressing rubber roller (14) and the second pressing rubber roller (19) in order from left to right, a fourth guide roller (28) being arranged below the laminating cylinder (13).

2. The multifunctional laminating machine as recited in claim 1, **characterized in that** the laminating device (12) further comprises a positioning flat pin, a rotary sleeve (35), and a positioning screw,
the rotary sleeve (35) being mounted on the first rubber roller swing arm (16), the positioning flat pin being mounted within the rotary sleeve (35), more than two positioning grooves being arranged on the rotary sleeve, the positioning crew being arranged on the first rubber roller swing arm (16) and engaged with the positioning grooves.

3. The multifunctional laminating machine as recited in claim 1, **characterized in that** the material-pressing device (1) comprises a material-pressing holder (29) and a material-pressing rod (30),
a material-pressing roller (31) being arranged on one end of the material-pressing rod (30), the other end of the material-pressing rod (30) being hinged with the second frame side (2), the material-pressing holder (29) being connected with the second frame side (2), a material-pressing cylinder (32) being hinged on the material-pressing holder (29), a number of positioning holes (33) being arranged on the material-pressing rod (30), the driving end of the material-pressing cylinder (32) being connected with one of the positioning holes (33).

4. The multifunctional laminating machine as recited in claim 1, **characterized in that** a number of wide slot two-way partial guide roller (34) are arranged on the first frame side (1), the second frame side (2), and the frame top (3).

5. A laminating method of the multifunctional of a laminating machine **characterized in that** the method comprises a forward single laminating process, a forward double laminating process and an inverse single laminating process;
the forward single laminating process comprising the following steps:
A1. making a first substrate material on a first unwinding device pass through a first pendulum roller device, a first unwinding tension device (5), a coating mechanism (7), a first coating channel tension-control pendulum roller device and a second guide roller (26) in turn, and then making it enter the right side of a laminating cylinder (13) of a laminating device (12);
B1. making a second substrate material on a second unwinding device pass through a second unwinding tension device (11) and a third guide roller (27) in turn, and then making it enter the right side of the laminating cylinder (13) of the laminating device (12);
C1. accomplishing a rewinding at a rewinding device after the first substrate material and the second substrate material are laminated at the laminating device (12);
the forward double laminating process comprising the following steps:
A2. making a first substrate material on a first unwinding device pass through a first pendulum roller device, a first unwinding tension device (5), a coating mechanism (7), a first coating channel tension-control pendulum roller device (6), and a second guide roller (26) in turn, and then making it enter the right side of a laminating cylinder (13) of a laminating device (12);
B2. making a second substrate material on a second unwinding device pass through a second unwinding tension device (11) and a third guide roller (27) in turn, and then making it enter the right side of the laminating cylinder (13) of the laminating device (12);
C2. laminating the first substrate material and the second substrate material for the first time at the left side of the laminating device (12) and laminating them for the second time at the right side of the laminating device, and then accomplishing a rewinding at a rewinding device after they pass through a first guide roller (25);
the inverse single laminating process comprising the following steps:
A3. making a first substrate material on a first unwinding device pass through a first pendulum roller device, a first unwinding tension device (5), a coating mechanism (7), a first coating channel tension-control pendulum roller device (6), and a second guide roller (26) in turn, and then making it enter the left side of a laminating cylinder (13) of a laminating device (12);
B3. making a second substrate material on a second unwinding device pass through a second unwinding tension device (11) and a third guide roller (27) in turn, and then making it enter the left side of the laminating cylinder (13) of the laminating device (12) ;
C3. making the laminating cylinder (13) and the second pressing rubber roller (19) to rotate in opposite direction, laminating the first substrate material and the second substrate material at the left side of the laminating device (12), and then accomplishing a rewinding at a rewinding device after they pass through a fourth guide roller (28).

## Patentansprüche

1. Multifunktionale Laminiermaschine, **dadurch gekennzeichnet, dass** sie einen Rahmen umfasst, der Rahmen umfassend eine erste Rahmenseite (1), eine zweite Rahmenseite (2) und eine Rahmenoberseite (3), die an der Oberseite der ersten Rahmenseite (1) und der zweiten Rahmenseite (2) angeordnet ist; wobei ein erster Abwickelmechanismus (4), eine erste Abwickelspannungsvorrichtung (5), eine erste Beschichtungskanal-Spannungssteuerungs-Pendelwalzenvorrichtung (6) und ein Beschichtungsmechanismus (7) an der ersten Rahmenseite (1) angeordnet sind;
ein zweiter Abwickelmechanismus (8), ein Aufwickelmechanismus (9), eine Materialanpressvorrichtung (10), eine zweite Abwickelspannvorrichtung (11) und eine Laminiervorrichtung (12) an der zweiten Rahmenseite angeordnet sind;
die Laminiervorrichtung (12) umfassend einen Laminierzylinder (13), eine erste Anpressgummiwalze (14), eine Gummiwalzenstrebe (15), einen ersten Gummiwalzen-Schwenkarm (16), eine fixierende Drehspindel (17), eine erste Stützstahlwalze (18), eine zweite Anpressgummiwalze (19), eine Stützstahlwalzen-Strebe (20), einen ersten Stützstahlwalzen-Schwenkarm (21), einen zweiten Gummiwalzen-Schwenkarm (22), eine Rückstellzugfeder, einen ersten Zylinder (23) und einen zweiten Zylinder (24),
der Laminierzylinder (13) mit der zweiten Rahmenseite (2) verbunden ist, der erste Gummiwalzen-Schwenkarm (16) an beiden Enden des Gummiwalzenstrebe (15) befestigt ist, die erste Anpressgummiwalze (14) auf dem ersten Gummiwalzen-Schwenkarm (16) montiert ist, der erste Stützstahlwalzen-Schwenkarm (21) an beiden Enden des Stützstahlwalzen-Strebe (20) befestigt ist, die erste Stützstahlwalze (18) an dem ersten Stützstahlwalzen-Schwenkarm (21) montiert ist, die fixierende Drehspindel (17) durch den ersten Gummiwalzen-Schwenkarm (16) mit dem ersten Stützstahlwalzen-Schwenkarm (21) verbunden ist, die Enden der ersten fixierenden Drehspindel (17) an der zweiten Rahmenseite (2) befestigt sind, der erste Gummiwalzen-Schwenkarm (16) und der erste Stützstahlwalzen-Schwenkarm (21) auf der fixierenden Drehspindel (17) drehbar sind, der erste Gummiwalzen-Schwenkarm (16) durch die Rückstellzugfeder mit dem ersten hinteren Stützstahlwalzen-Schwenkarm (21) verbunden ist, ein Ende des ersten Zylinders (23) an der zweiten Rahmenseite (2) befestigt ist, das andere Ende des ersten Zylinders (23) mit dem ersten hinteren Stützstahlwalzen-Schwenkarm (21) verbunden ist, ein Ende des zweiten Zylinders (24) an der zweiten Rahmenseite (2) befestigt ist, ein Ende des zweiten Zylinders (24) an der zweiten Rahmenseite (2) befestigt ist, das andere Ende des zweiten Zylinders (24) mit dem zweiten Gummiwalzen-Schwenkarm (22) verbunden ist, die zweite Anpressgummiwalze (19) an dem zweiten Gummiwalzen-Schwenkarm (22) montiert ist, die zweite Anpressgummiwalze (19) an dem linken Ende des Laminierzylinders (13) ist, die erste Stützstahlwalze (18) und die erste Anpressgummiwalze (14) an dem rechten Ende des Laminierzylinders (13) ist;
eine erste Führungswalze (25), eine zweite Führungswalze (26) und eine dritte Führungswalze (27), die in der Reihenfolge von links nach rechts oberhalb der ersten Stützstahlwalze (18), des Laminierzylinders (13), der ersten Anpressgummiwalze (14) und der zweiten Anpressgummiwalze (19) angeordnet sind, wobei eine vierte Führungswalze (28) unterhalb des Laminierzylinders (13) angeordnet ist.

2. Multifunktionale Laminiermaschine gemäß Anspruch 1, **dadurch gekennzeichnet, dass** die Laminiervorrichtung (12) ferner einen flachen Stellstift, eine Drehhülse (35) und eine Stellschraube umfasst,
wobei die Drehhülse (35) an dem ersten Gummiwalzen-Schwenkarm (16) montiert ist, der flache Stellstift innerhalb der Drehhülse (35) montiert ist, mehr als zwei Stellnuten an der Drehhülse angeordnet sind, die Stellschraube an dem ersten Gummiwalzen-Schwenkarm (16) angeordnet ist und mit den Stellnuten in Eingriff ist.

3. Multifunktionale Laminiermaschine gemäß Anspruch 1, **dadurch gekennzeichnet, dass** die Materialanpressvorrichtung (1) einen Materialanpresshalter (29) und eine Materialanpressstange (30) umfasst,
wobei eine Materialanpresswalze (31) an einem Ende der Materialanpressstange (30) angeordnet ist, das andere Ende der Materialanpressstange (30) an der zweiten Rahmenseite (2) angelenkt ist, wobei der Materialanpresshalter (29) mit der zweiten Rahmenseite (2) verbunden ist, ein Materialanpresszylinder (32) an dem Materialanpresshalter (29) angelenkt ist, wobei eine Anzahl von Stelllöchern (33) an der Materialanpressstange (30) angeordnet ist, das Antriebsende des Materialanpresszylinders (32) mit einem der Stelllöcher (33) verbunden ist.

4. Multifunktionale Laminiermaschine gemäß Anspruch 1, **dadurch gekennzeichnet, dass** eine Anzahl von Breitschlitz-Zweiwege-Teilführungswalzen (34) an der ersten Rahmenseite (1), der zweiten Rahmenseite (2) und der Rahmenoberseite (3) angeordnet sind.

5. Laminierverfahren der Multifunktionalität einer Laminiermaschine, **dadurch gekennzeichnet, dass** das Verfahren einen einfachen Vorwärts-Laminierprozess, einen doppelten Vorwärts-Laminierprozess und einen einfachen Umkehr-Laminierprozess umfasst;
der einfache Vorwärts-Laminierprozess die folgenden Schritte umfassend:
A1. Bewirken, dass ein erstes Substratmaterial auf einer ersten Abwickelvorrichtung der Reihe nach durch eine erste Pendelwalzenvorrichtung, eine erste Abwickelspannungsvorrichtung (5), einen Beschichtungsmechanismus (7), eine erste Beschichtungskanal-Spannungssteuerungs-Pendelwalzenvorrichtung und eine zweite Führungswalze (26) verläuft und dann Bewirken, dass es in die rechte Seite eines Laminierzylinders (13) einer Laminiervorrichtung (12) eintritt;
B1. Bewirken, dass ein zweites Substratmaterial auf einer zweiten Abwickelvorrichtung der Reihe nach durch eine zweite Abwickelspannungsvorrichtung (11) und eine dritte Führungswalze (27) verläuft und dann Bewirken, dass es in die rechte Seite eines Laminierzylinders (13) der Laminiervorrichtung (12) eintritt;
C1. Ausführen eines Aufwickelns an einer Aufwickelvorrichtung, nachdem das erste Substratmaterial und das zweite Substratmaterial an der Laminiervorrichtung (12) laminiert wurden;
der doppelte Vorwärts-Laminierprozess die folgenden Schritte umfassend:
A2. Bewirken, dass ein erstes Substratmaterial auf einer ersten Abwickelvorrichtung der Reihe nach durch eine erste Pendelwalzenvorrichtung, eine erste Abwickelspannungsvorrichtung (5), einen Beschichtungsmechanismus (7), eine erste Beschichtungskanal-Spannungssteuerungs-Pendelwalzenvorrichtung (6) und eine zweite Führungswalze (26) verläuft und dann Bewirken, dass es in die rechte Seite eines Laminierzylinders (13) einer Laminiervorrichtung (12) eintritt;
B2. Bewirken, dass ein zweites Substratmaterial auf einer zweiten Abwickelvorrichtung der Reihe nach durch eine zweite Abwickelspannungsvorrichtung (11) und eine dritte Führungswalze (27) verläuft und dann Bewirken, dass es in die rechte Seite eines Laminierzylinders (13) der Laminiervorrichtung (12) eintritt;
C2. Laminieren des ersten Substratmaterials und des zweiten Substratmaterials zum ersten Mal auf der linken Seite der Laminiervorrichtung (12) und deren Laminieren zum zweiten Mal auf der rechten Seite der Laminiervorrichtung und dann Ausführen eines Aufwickelns an einer Aufwickelvorrichtung, nachdem sie durch eine erste Führungswalze (25) verlaufen sind;
der einfache Umkehr-Laminierprozess die folgenden Schritte umfassend:
A3. Bewirken, dass ein erstes Substratmaterial auf einer ersten Abwickelvorrichtung der Reihe nach durch eine erste Pendelwalzenvorrichtung, eine erste Abwickelspannungsvorrichtung (5), einen Beschichtungsmechanismus (7), eine erste Beschichtungskanal-Spannungssteuerungs-Pendelwalzenvorrichtung (6) und eine zweite Führungswalze (26) verläuft und dann Bewirken, dass es in die linke Seite eines Laminierzylinders (13) einer Laminiervorrichtung (12) eintritt;
B3. Bewirken, dass ein zweites Substratmaterial auf einer zweiten Abwickelvorrichtung der Reihe nach durch eine zweite Abwickelspannungsvorrichtung (11) und eine dritte Führungswalze (27) verläuft und dann Bewirken, dass es in die linke Seite eines Laminierzylinders (13) der Laminiervorrichtung (12) eintritt;
C3. Bewirken, dass der Laminierzylinder (13) und die zweite Anpressgummiwalze (19) in entgegengesetzte Richtung drehen, Laminieren des ersten Substratmaterials und des zweiten Substratmaterials auf der linken Seite der Laminiervorrichtung (12) und dann Ausführen eines Aufwickelns an einer Aufwickelvorrichtung, nachdem sie durch eine vierte Führungswalze (28) verlaufen sind.

## Revendications

1. Une machine de stratification multifonctionnelle, **caractérisée en ce qu'**elle comprend un cadre, le cadre comprenant un premier côté de cadre (1), un deuxième côté de cadre (2), et un dessus de cadre (3) disposé sur le dessus du premier côté de cadre (1) et du deuxième côté de cadre (2) ;
un premier mécanisme de déroulement (4), un premier dispositif de tension de déroulement (5), un premier dispositif de rouleau pendulaire de contrôle de la tension du canal de revêtement (6) et un mécanisme de revêtement (7) étant disposés sur le premier côté du cadre (1) ;
un deuxième mécanisme de déroulement (8), un mécanisme de rembobinage (9), un dispositif de pressage de matériau (10), un deuxième dispositif de tension de déroulement (11), et un dispositif de stratification (12) étant disposés sur le deuxième côté du cadre ;
le dispositif de stratification (12) comprenant un cylindre de stratification (13), un premier rouleau en caoutchouc de pression (14), une entretoise de rouleau en caoutchouc (15), un premier bras oscillant de rouleau en caoutchouc (16), un arbre de pivotement de fixation (17), un premier rouleau en acier d'appui (18), un deuxième rouleau en caoutchouc de pression (19), une entretoise de rouleau en acier d'appui (20), un premier bras oscillant de rouleau en acier d'appui (21), un deuxième bras oscillant de rouleau en caoutchouc (22), un ressort de tension de rappel, un premier cylindre (23), et un deuxième cylindre (24), le cylindre de stratification (13) étant relié au deuxième côté du cadre (2), le premier bras oscillant de rouleau en caoutchouc (16) étant fixé sur les deux extrémités de l'entretoise de rouleau en caoutchouc (15), le premier rouleau en caoutchouc de pression (14) étant monté sur le premier bras oscillant de rouleau en caoutchouc (16), le premier bras oscillant de rouleau en acier d'appui (21) étant fixé sur les deux extrémités de l'entretoise de rouleau en acier d'appui (20), le premier rouleau en acier d'appui (18) étant monté sur le premier bras oscillant de rouleau en acier d'appui (21), l'arbre de pivotement de fixation (17) étant relié au premier bras oscillant de rouleau en acier d'appui (21) par l'intermédiaire du premier bras oscillant de rouleau en caoutchouc (16), les extrémités du premier arbre de pivotement de fixation (17) étant fixées sur le deuxième côté du cadre (2), le premier bras oscillant de rouleau en caoutchouc (16) et le premier bras oscillant de rouleau en acier d'appui (21) pouvant tourner sur l'arbre de pivotement de fixation (17), le premier bras oscillant de rouleau en caoutchouc (16) étant relié au premier bras oscillant de rouleau en acier d'appui (21) par le ressort de tension de rappel, une extrémité du premier cylindre (23) étant fixée sur le deuxième côté du cadre (2), l'autre extrémité du premier cylindre (23) étant reliée au premier bras oscillant de rouleau en acier d'appui (21), une extrémité du deuxième cylindre (24) étant fixée sur le deuxième côté du cadre (2), l'autre extrémité du deuxième cylindre (24) étant reliée au deuxième bras oscillant de rouleau en caoutchouc (22), le deuxième rouleau en caoutchouc de pression (19) étant monté sur le deuxième bras oscillant de rouleau en caoutchouc (22), le deuxième rouleau en caoutchouc de pression (19) étant à l'extrémité gauche du cylindre de stratification (13), le premier rouleau en acier d'appui (18) et le premier rouleau en caoutchouc de pression (14) étant à l'extrémité droite du cylindre de stratification (13) ; un premier rouleau de guidage (25), un deuxième rouleau de guidage (26), et un troisième rouleau de guidage (27) étant disposés au-dessus du premier rouleau en acier d'appui (18), du cylindre de stratification (13), du premier rouleau en caoutchouc de pression (14) et du deuxième rouleau en caoutchouc de pression (19) dans l'ordre de gauche à droite, un quatrième rouleau de guidage (28) étant disposé sous le cylindre de stratification (13).

2. La machine de stratification multifonctionnelle selon la revendication 1, **caractérisée en ce que** le dispositif de stratification (12) comprend en outre une broche plate de positionnement, un manchon rotatif (35), et une vis de positionnement, le manchon rotatif (35) étant monté sur le premier bras oscillant de rouleau en caoutchouc (16), la broche plate de positionnement étant montée dans le manchon rotatif (35), plus de deux rainures de positionnement étant disposées sur le manchon rotatif, la vis de positionnement étant disposée sur le premier bras oscillant de rouleau en caoutchouc (16) et engagée avec les rainures de positionnement.

3. La machine de stratification multifonctionnelle selon la revendication 1, **caractérisée en ce que** le dispositif de pressage de matériau (1) comprend un support de pressage de matériau (29) et une tige de pressage de matériau (30),
un rouleau de pressage de matériau (31) étant disposé sur une extrémité de la tige de pressage de matériau (30), l'autre extrémité de la tige de pressage de matériau (30) étant articulée avec le deuxième côté du cadre (2), le support de pressage de matériau (29) étant relié au deuxième côté du cadre (2), un cylindre de pressage de matériau (32) étant articulé sur le support de pressage de matériau (29), un certain nombre de trous de positionnement (33) étant disposés sur la tige de pressage de matériau (30), l'extrémité d'entraînement du cylindre de pressage de matériau (32) étant reliée à l'un des trous de positionnement (33).

4. La machine de stratification multifonctionnelle selon la revendication 1, **caractérisée en ce qu'**un certain nombre de rouleaux de guidage partiels bidirectionnels à fente large (34) sont disposés sur le premier côté du cadre (1), le deuxième côté du cadre (2), et le dessus du cadre (3).

5. Un procédé de stratification de la machine de stratification multifonctionnelle **caractérisé en ce que** le procédé comprend un procédé de stratification simple avant, un procédé de stratification double avant et un procédé de stratification simple inverse ;
le procédé de stratification simple avant comprenant les étapes suivantes :
A1. faire passer un premier matériau de substrat sur un premier dispositif de déroulement à travers un premier dispositif de rouleau pendulaire, un premier dispositif de tension de déroulement (5), un mécanisme de revêtement (7), un premier dispositif de rouleau pendulaire de contrôle de la tension du canal de revêtement et un deuxième rouleau de guidage (26) tour à tour, puis le faire entrer dans le côté droit d'un cylindre de stratification (13) d'un dispositif de stratification (12) ;
B1. faire passer un deuxième matériau de substrat sur un deuxième dispositif de déroulement à travers un deuxième dispositif de tension de déroulement (11) et un troisième rouleau de guidage (27) tour à tour, puis le faire entrer dans le côté droit du cylindre de stratification (13) du dispositif de stratification (12) ;
C1. réaliser un rembobinage au niveau d'un dispositif de rembobinage après que le premier matériau de substrat et le deuxième matériau de substrat ont été stratifiés au niveau du dispositif de stratification (12) ;
le procédé de stratification double avant comprenant les étapes suivantes :
A2. faire passer un premier matériau de substrat sur un premier dispositif de déroulement à travers un premier dispositif de rouleau pendulaire, un premier dispositif de tension de déroulement (5), un mécanisme de revêtement (7), un premier dispositif de rouleau pendulaire de contrôle de la tension du canal de revêtement (6), et un deuxième rouleau de guidage (26) tour à tour, puis le faire entrer dans le côté droit d'un cylindre de stratification (13) d'un dispositif de stratification (12) ;
B2. faire passer un deuxième matériau de substrat sur un deuxième dispositif de déroulement à travers un deuxième dispositif de tension de déroulement (11) et un troisième rouleau de guidage (27) tour à tour, puis le faire entrer dans le côté droit du cylindre de stratification (13) du dispositif de stratification (12) ;
C2. stratifier le premier matériau de substrat et le deuxième matériau de substrat pour la première fois au niveau du côté gauche du dispositif de stratification (12) et les stratifier pour la deuxième fois au niveau du côté droit du dispositif de stratification, puis réaliser un rembobinage au niveau d'un dispositif de rembobinage après leur passage à travers un premier rouleau de guidage (25) ;
le procédé de stratification simple inverse comprenant les étapes suivantes :
A3. faire passer un premier matériau de substrat sur un premier dispositif de déroulement à travers un premier dispositif de rouleau pendulaire, un premier dispositif de tension de déroulement (5), un mécanisme de revêtement (7), un premier dispositif de rouleau pendulaire de contrôle de la tension du canal de revêtement (6), et un deuxième rouleau de guidage (26) tour à tour, puis le faire entrer dans le côté gauche d'un cylindre de stratification (13) d'un dispositif de stratification (12) ;
B3. faire passer un deuxième matériau de substrat sur un deuxième dispositif de déroulement à travers un deuxième dispositif de tension de déroulement (11) et un troisième rouleau de guidage (27) tour à tour, puis le faire entrer dans le côté gauche du cylindre de stratification (13) du dispositif de stratification (12) ;
C3. faire tourner le cylindre de stratification (13) et le deuxième rouleau en caoutchouc de pression (19) dans des directions opposées, stratifier le premier matériau de substrat et le deuxième matériau de substrat au niveau du côté gauche du dispositif de stratification (12), puis réaliser un rembobinage au niveau d'un dispositif de rembobinage après leur passage à travers un quatrième rouleau de guidage (28).
